# EUROPEAN PATENT APPLICATION

(11) **EP 1 795 720 A1**
(43) Date of publication of application: **13.06.2007**
(21) Application number: 05778256.7
(22) Date of filing: 06.09.2005
(51) Int. Cl.: F01N 3/02, B01D 53/94, F01N 3/24, F01N 3/28, F01N 3/36, B01D 46/42

(54) **APPARATUS FOR CLARIFYING EXHAUST GAS**

(30) Priority: 07.09.2004 JP 2004259713
(71) Applicant: Hino Motors, Ltd., Hino-shi, Tokyo 191-8660 (JP)
(72) Inventor: IGARASHI, Tatsuki, shi, Tokyo 1918660; (JP)
(74) Representative: Walcher, Armin
(86) International application number: PCT/JP2005/016296
(87) International publication number: WO 2006/028070

(57) **Abstract**

An oxidation catalyst arranged frontward of a catalytic regenerative particulate filter is prevented from being clogged.

Disclosed is an exhaust emission control device in which a catalytic regenerative particulate filter 4 is incorporated in an exhaust pipe 3 and has a flow-through type oxidation catalyst arranged frontward of the filter, fuel being added to exhaust gas 2 upstream of the particulate filter 4, heat generated by oxidation reaction of the added fuel on the frontward oxidation catalyst being used for combustion of captured particulates in the backward particulate filter to forcedly regenerate the particulate filter. Arranged frontward of the catalytic regenerative particulate filter 4 is the flow-through type oxidation catalyst 12 carried by a honeycomb-structured metallic carrier.

## Description

### Technical Field

The present invention relates to an exhaust emission control device.

### Background Art

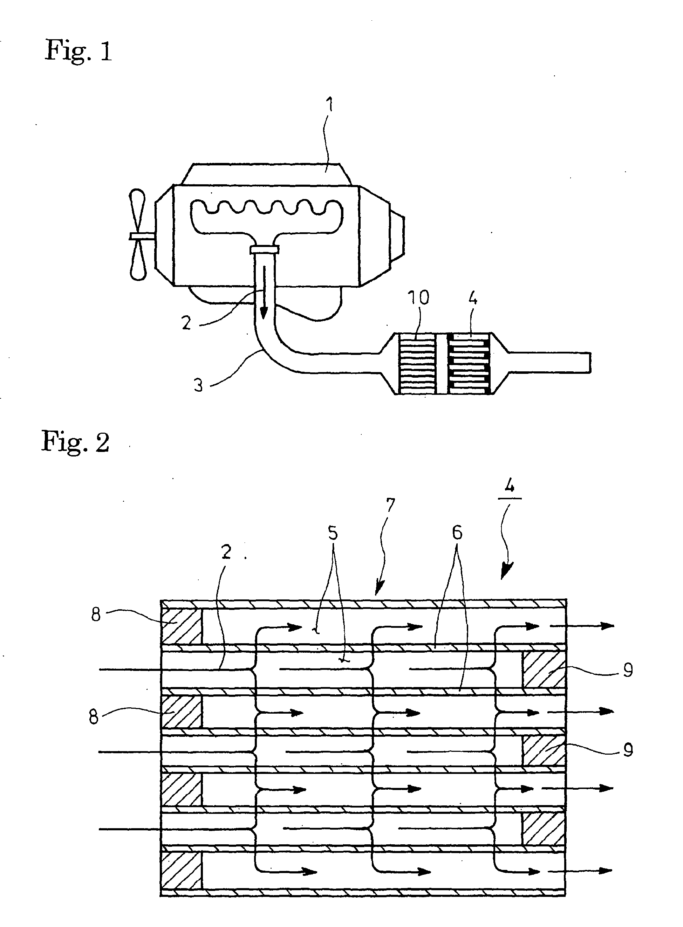

Particulates or particulate matter from a diesel engine is mainly constituted by carbonic soot and a soluble organic fraction (SOF) of high-boiling hydrocarbon and contains a trace of sulfate (misty sulfuric acid fraction). In order to suppress such kind of particulates from being discharged to atmosphere, conventionally a particulate filter 4 is incorporated in an exhaust pipe 3 through which exhaust gas 2 from a diesel engine 1 flows as shown in Fig. 1.

As shown in particular in Fig. 2, the particulate filter 4 comprises a porous honeycomb-structured filter body 7 made of ceramics such as cordierite and having lattice-like compartmentalized passages 5; alternate ones of the passages 5 have inlets plugged with plugs 8 and the remaining passages with unplugged open inlets are plugged at their outlets with plugs 9. Thus, only the exhaust gas 2 passing through thin porous walls 6 compartmentalizing the respective passages 5 is discharged downstream and particulates are captured on inner surfaces of the thin porous walls 6.

The particulates in the exhaust gas 2, which are captured and accumulated on the inner surfaces of the walls 6, require to be burned off so as to regenerate the particulate filter 4 before exhaust resistance considerably increases due to clogging. However, the exhaust gas from the diesel engine 1 in a normal engine operation status rarely has a chance to obtain a temperature level at which the particulates ignite by themselves. Thus, it has been studied to use a catalytic regenerative particulate filter 4 which comprises a filter body 7 integrally carrying an oxidation catalyst.

Use of such catalytic regenerative particulate filter 4 will accelerate oxidation reaction of captured particulates to lower their ignition temperature, so that the particulates can be burned off at exhaust temperature level lower than ever before.

However, even if the catalyst regenerative particulate filter 4 is used, a captured amount may exceed a treated amount of particulates in engine operation regions with low exhaust temperature level. Continued engine operation with such low exhaust temperature level may hinder good regeneration of the particulate filter 4, resulting in excessive accumulation of the captured particulates in the filter 4.

In order to overcome this, it has been envisaged as shown in Fig. 1 that an oxidation catalyst 10 carried by a carrier in the form of a flow-through type honeycomb structure made of ceramics such as cordierite is arranged separately and frontward of the particulate filter 4.
With the accumulated amount of particulates being increased, fuel is added to the exhaust gas 2 upstream of the oxidation catalyst 10 so as to forcedly regenerate the particulate filter 4.

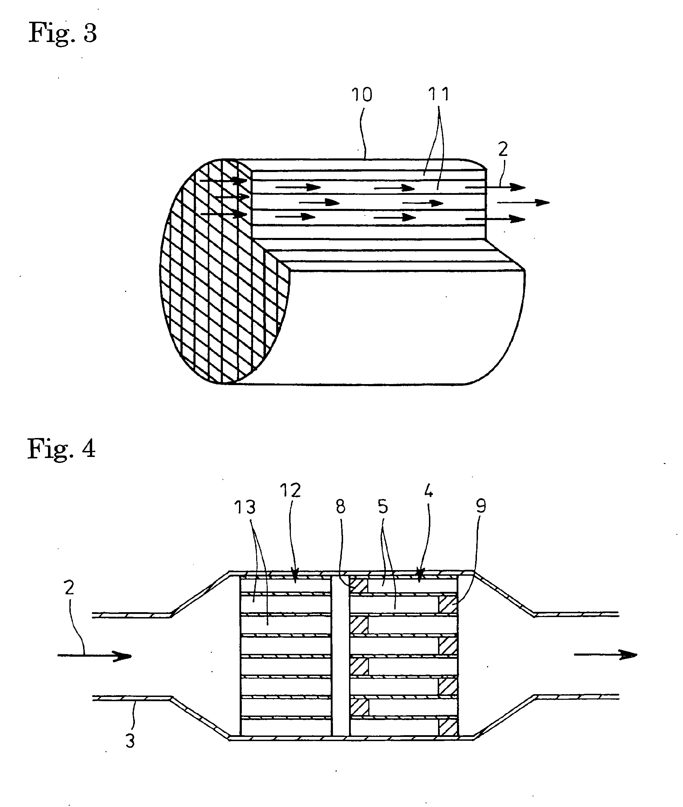

More specifically, fuel (HC) added upstream of the particulate filter 4 undergoes oxidation reaction during its passage through cells 11 of the frontward oxidation catalyst 10 (see Fig. 3). The exhaust gas 2 heated by heat of the reaction and flowing into the particulate filter 4 just behind increases a catalytic floor temperature level of the filter to burn off the particulates, thereby regenerating the particulate filter 4.

This kind of fuel addition is usually realized in such a manner that fuel main injection at or near a compressive upper dead center is followed by post injection at non-ignition timing after the compressive upper dead center to thereby add fuel to the exhaust gas. Alternatively, the main injection to the cylinders may be delayed into timing later than usual to thereby add the fuel to the exhaust gas 2. Furthermore, other than such control of fuel injection to cylinders to increase unburned fuel in the exhaust gas 2 for addition of the fuel, an injector as fuel addition means may be fitted into the exhaust pipe 3 at a proper position thereof (alternatively, into an exhaust manifold), the fuel being added to the exhaust gas directly through injection by the injector.

The following Reference 1 by the same applicant of this invention is an example of prior art documents on such forced regeneration of a particulate filter.
[Reference 1] JP2003-193824A

### Summary of the Invention

### Problems to be Solved by the Invention

However, in a vehicle such as a city shuttle-bus tending to travel on congested roads, it is assumed that a light-load engine operation with low exhaust temperature level continues. In order to forcedly regenerate the particulate filter 4 through this kind of fuel addition in such a vehicle and when fuel addition is conducted with the frontward oxidation catalyst 10 being at a temperature level (in the order of about 190°C) which is tightly within a lower limit for catalytic activity of the catalyst 10, mists of untreated added fuel accumulated on a front end of the oxidation catalyst with not high catalytic activity. As a result, the front end of the oxidation catalyst becomes wet and sticky and the particulates tend to attach to the front end. Thus, there is a fear that the particulates are accumulated there and are mixed with mists of the added fuel into agglomerated mixtures as a result of incomplete combustion, which may cause clogging on the front end of the oxidation catalyst 10.

The invention was made in view of the above and has its object to provide an exhaust emission control device which can prevent an oxidation catalyst arranged frontward of a catalytic regenerative particulate filter from being clogged.

### Means or Measures for Solving the Problems

The invention is directed to an exhaust emission control device wherein a catalyst regenerative particulate filter is incorporated in an exhaust pipe and has a flow-through type oxidation catalyst arranged frontward of the filter, fuel being added to exhaust gas upstream of the particulate filter, heat generated by oxidation reaction of the added fuel on the frontward oxidation catalyst being used for combustion of captured particulates in the rearward particulate filter to thereby forcedly regenerate the particulate filter, characterized in that the frontward oxidation catalyst is carried by a metallic carrier.

Thus, by carrying the frontward oxidation catalyst by the metallic carrier and in comparison with use of a conventional ceramic carrier, cells of the oxidation catalyst through which the exhaust gas passes are allowed to have walls thin in thickness and smooth in surface. Thus, a total area on the wall front ends of the cells is reduced in comparison with a whole front end area of the oxidation catalyst to thereby substantially reduce the area to which the particulates tend to attach; and, moreover, the particulates become less attachable also to inner wall surfaces of the cells.

As a result, even in a continued light-load engine operation with low exhaust temperature level, the particulates or mixtures thereof with mists of the added fuel do not bridge over openings of the cells and agglomeration based on such bridges is prevented from proceeding, whereby the oxidation catalyst is prevented from being clogged.

The invention is also directed to an exhaust emission control device wherein a catalyst regenerative particulate filter is incorporated in an exhaust pipe and has a flow-through type oxidation catalyst arranged frontward of the filter, fuel being added to exhaust gas upstream of the particulate filter, heat generated by oxidation reaction of the added fuel on the frontward oxidation catalyst being used for combustion of captured particulates in the rearward particulate filter to thereby forcedly regenerate the particulate filter, characterized in that the frontward oxidation catalyst is divided into front and rear oxidation catalysts, the divided front and rear oxidation catalysts being carried by metallic and ceramic carriers, respectively.

Thus, by dividing the oxidation catalyst into front and rear catalysts, the divided front and rear oxidation catalysts being carried by metallic and ceramic carriers, respectively and with respect to the front oxidation catalyst, in comparison with use of a conventional ceramic carrier, cells of the front oxidation catalyst through which the exhaust gas passes are allowed to have walls thin in thickness and smooth in surface; thus, a total area on the wall front ends of the cells is reduced in comparison with a whole front end area of the front oxidation catalyst to thereby reduce the area to which the particulates tend to attach; and, moreover, the particulates becomes less attachable also to inner wall surfaces of the cells.

As a result, even in a continued light-load engine operation with low exhaust temperature level, the particulates or mixtures thereof with mists of the added fuel do not bridge over openings of the cells and agglomeration based on such bridges is prevented from proceeding, whereby the front oxidation catalyst is prevented from being clogged.

And, with respect to the rear oxidation catalyst, only gasified portions of the added fuel reach there since the mists of the added fuel are received by the front oxidation catalyst. As a result, no clogging due to accumulated particulates occurs on the front end of the rear oxidation catalyst; moreover, the catalytic floor temperature of the rear oxidation catalyst is elevated in temperature by the exhaust gas elevated in temperature due to its passage through the front oxidation catalyst, which contributes to effective proceeding of oxidation reaction of the added fuel (HC), and heat from the reaction effectively elevates the exhaust gas in temperature.

In this case, the rear oxidation catalyst carried by the ceramic carrier with less heat conductivity, which has less heat-dissipative than the metallic carrier with high heat conductivity, is superior in that it can elevate the exhaust gas in temperature within a shorter period of time from starting of the fuel addition. As a result, in comparison with the arrangement of the single oxidation catalyst carried by the metallic carrier frontward of the particulate filter, the exhaust gas can be elevated in temperature at an early stage.

### Effects of the Invention

According to the above-mentioned exhaust emission control device of the invention, the following excellent effects and advantages can be obtained.

(I) Even in a continued light-load engine operation with low exhaust temperature level, the oxidation catalyst arranged frontward of the particulate filter can be reliably prevented from being clogged. Forced regeneration of the particulate filter can be realized without any problem even at a temperature level (in the order of about 190°C) which is tightly within a lower limit for catalytic activity of the oxidation catalyst.

(II) By dividing the frontward oxidation catalyst into front and rear catalysts, the divided front and rear oxidation catalysts being carried by metallic and ceramic carriers, respectively and even in a continued light-load engine operation with low exhaust temperature level, the front and rear oxidation catalysts arranged frontward of the particulate filter can be prevented from being clogged. Forced regeneration of the particulate filter can be realized without any problems even at a temperature level (in the order of about 190°C) which is tightly within a lower limit for catalytic activity of the oxidation catalysts. In comparison with the arrangement of the single oxidation catalyst carried by the metallic carrier frontward of the particulate filter, the exhaust gas can be elevated in temperature at an early stage.

### Brief Description of the Drawings

[Fig. 1] A schematic view showing the prior art.
[Fig. 2] A sectional view showing particulars of a particulate filter shown in Fig. 1.
[Fig. 3] A perspective view partly cut out showing particulars of an oxidation catalyst shown in Fig. 1.
[Fig. 4] A sectional view showing an embodiment of the invention.
[Fig. 5] A sectional view showing a further embodiment of the invention.

### Explanation of the Reference Numerals

2 exhaust gas
3 exhaust pipe
4 particulate filter
12 oxidation catalyst
13 cell
14 oxidation catalyst
15 cell

### Best Mode for Carrying Out the Invention

Embodiments of the invention will be described in conjunction with the drawings.
Fig. 4 shows an embodiment of the invention. In the exhaust emission control device of the embodiment, a flow-through type oxidation catalyst 10 carried by a conventional honeycomb-structured ceramic carrier mentioned above with respect to Fig. 1 is substituted by a flow-through type oxidation catalyst 12 carried by a honeycomb-structured metallic carrier is arranged frontward of the catalyst regenerative particulate filter 4. This kind of metallic carrier used is made of metal such as stainless steel which is highly heat and corrosive resistant.

Thus, by carrying the frontward oxidation catalyst 12 by the metallic carrier, in comparison with use of a conventional carrier made of ceramics such as cordierite, cells 13 through which the exhaust gas 2 passes are allowed to have walls thin in thickness and smooth in surface.

More specifically, in the case of the carrier made of ceramics such as cordierite, the walls have thickness in the order of about 150-200 µm and rough surfaces with minute irregularities whereas in the case of the carrier made of metal such as stainless steel, the walls may have thickness in the order of about 30-100 µm and smooth surfaces with extremely less irregularities.

As a result, a total area on the wall front ends of the cells 13 is reduced in comparison with a whole front end area of the oxidation catalyst 12 to thereby substantially reduce the area to which the particulates tend to attach and, moreover, the particulates become less attachable also to inner wall surfaces of the cells 13. As a result, even in a continued light-load engine operation with low exhaust temperature level, the particulates or mixtures thereof with mists of the added fuel do not bridge over openings of the cells 13 and agglomeration based on such bridges is prevented from proceeding, whereby the oxidation catalyst 12 is prevented from being clogged.

In fact, it was confirmed by verification experiments by the inventor that the oxidation catalyst 12 carried by the metallic carrier and arranged frontward of the particulate filter 4 brings about remarkable clogging-preventive effect.

Thus, according to the above embodiment, even in a continued light-load engine operation with low exhaust temperature level, the oxidation catalyst 12 arranged frontward of the particulate filter 4 can be reliably prevented from being clogged, and forced regeneration of the particulate filter 4 can be realized without any problem at a temperature level (in the order of about 190°C) which is tightly within a lower limit for catalytic activity of the oxidation catalyst 12.

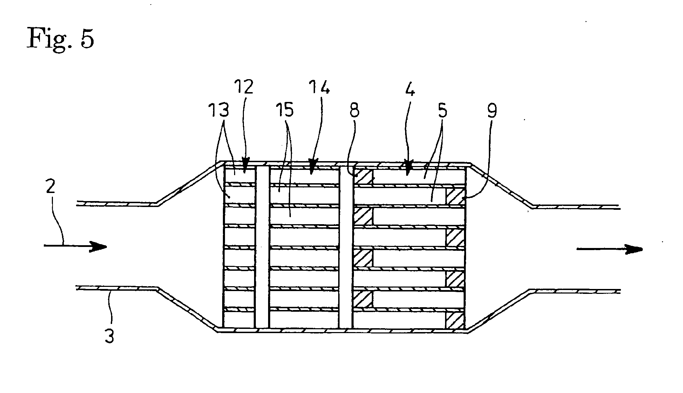

Fig. 5 shows a further embodiment of the invention. In the exhaust emission control device of the embodiment, an oxidation catalyst arranged frontward of a particulate filter 4 is divided into front and rear oxidation catalysts, the divided front and rear elongate oxidation catalysts 12 and 14 being carried by metallic and ceramic carriers, respectively. In Fig. 5, reference numeral 15 denotes cells in the rear oxidation catalyst 14 through which the exhaust gas 2 passes.

Thus, by dividing the oxidation catalyst into front and rear oxidation catalysts, the divided front and rear oxidation catalysts 12 and 14 being carried by metallic and ceramic carriers, respectively and first with respect to the front oxidation catalyst 12, in comparison with use of a conventional ceramic carrier, the cells 13 through which the exhaust gas 2 passes are allowed to have walls thin in thickness and smooth in surface. As a result, a total area on the wall front ends of the cells 13 is reduced in comparison with a whole front end area of the front oxidation catalyst 12 to thereby substantially reduce the area to which the particulates tend to attach; and, moreover, the particulates become less attachable also to inner wall surfaces of the cells 13.

As a result, even in a continued light-lord engine operation with low exhaust temperature level, the particulates or mixture thereof with mists of the added fuel do not bridge over openings of the cells 13 and agglomeration based on such bridge is prevented from proceeding, whereby the front oxidation catalyst 12 is prevented from being clogged.

And, with respect to the rear oxidation catalyst 14, only gasified portion of the added fuel reach the same since the mists of the added fuel are received by the front oxidation catalyst 12. As a result, no clogging due to accumulated particulates occurs on the front end of the rear oxidation catalyst 14; moreover, the catalytic floor temperature of the rear oxidation catalyst 14 is elevated in temperature by the exhaust gas 2 elevated in temperature due to its passage through the front oxidation catalyst 12, which contributes to effective proceeding of oxidation reaction of the added fuel (HC), and heat from the reaction effectively elevates the exhaust gas 2 in temperature.

In this case, the rear oxidation catalyst 14 carried by the ceramic carrier with less heat conductivity, which has less heat-dissipative than the metallic carrier with high heat conductivity, is superior in that it can elevate the exhaust gas 2 in temperature within a shorter period of time from starting of the fuel addition. As a result, in comparison with the arrangement of the single oxidation catalyst 12 carried by the metallic carrier frontward of the particulate filter 4, the exhaust gas 2 can be elevated in temperature at an early stage.

It is to be understood that the an exhaust emission control device of the invention is not limited to the above embodiments and that various changes and modifications may be made without departing from the spirit of the invention.

## Claims

1. An exhaust emission control device wherein a catalyst regenerative particulate filter (4) is incorporated in an exhaust pipe (3) and has a flow-through type oxidation catalyst (12) arranged frontward of the filter (4), fuel being added to exhaust gas (2) upstream of the particulate filter (4), heat generated by oxidation reaction of the added fuel on the frontward oxidation catalyst (12) being used for combustion of captured particulates in the rearward particulate filter (4) to thereby forcedly regenerate the particulate filter (4), said exhaust emission control device comprising the frontward oxidation catalyst (12) carried by a metallic carrier.

2. An exhaust emission control device wherein a catalyst regenerative particulate filter (4) is incorporated in an exhaust pipe (3) and has a flow-through type oxidation catalyst (12) arranged frontward of the filter (4), fuel being added to exhaust gas (2) upstream of the particulate filter (4), heat generated by oxidation reaction of the added fuel on the frontward oxidation catalyst (12) being used for combustion of captured particulates in the rearward particulate filter (4) to thereby forcedly regenerate the particulate filter (4), said exhaust emission control device comprising the frontward oxidation catalyst divided into front and rear oxidation catalysts (12, 14), the divided front and rear oxidation catalysts (12, 14) being carried by metallic and ceramic carriers, respectively.
